# EUROPEAN PATENT SPECIFICATION

(11) **EP 3 245 923 B1**
(45) Date of publication and mention of the grant of the patent: **22.04.2020**
(21) Application number: 17170259.0
(22) Date of filing: 09.05.2017
(51) Int. Cl.: A47J 43/07

(54) **A LIDDED DEVICE OF A FOOD PROCESSOR**
BEDECKELTE VORRICHTUNG EINER KÜCHENMASCHINE
DISPOSITIF À COUVERCLE D'UN ROBOT DE CUISINE

(30) Priority: 18.05.2016 CN 201620450852 U
(43) Date of publication of application: 22.11.2017
(73) Proprietor: Home Culture Appliance (Shenzhen) Limited, Shenzhen Guangdong (CN)
(72) Inventor: WONG, Chi Wai, Shenzhen, Guangdong (CN)
(74) Representative: AOMB Polska Sp. z.o.o.

(56) References cited:
- WO-A1-95/24852
- FR-A1- 2 718 002
- US-A- 5 454 299
- US-A1- 2009 045 272
- US-A1- 2014 217 216

## Description

### Technical Field

The present invention relates to a food processor and more particularly to a lidded device for use in a food processor.

### Description of Related Art

One who is working with the food in the bowl of a food processor may have their fingers cut by the cutter in the bowl if they trigger the operating switch by accident but fail to withdraw their hands in time. To avoid such mishaps, most of the existing food processors are provided with a safety mechanism on the lid so that only when the bowl of a food processor is properly covered with its lid. The motor in the main body of the food processor can be effectively started to rotate the cutter in the bowl by the user triggering the operating switch. In other words, if the lid does not cover the bowl properly, the motor cannot be effectively started by triggering the operating switch. A common approach to implement such a safety mechanism in the prior art is to provide a trigger portion at a bottom portion of the lid. When the lid is properly mounted on the top portion of the bowl to cover the bowl, the trigger portion at the bottom portion of the lid pushes down and thus triggers a switch connecting rod in the handle of the bowl. If the operating switch is triggered now, the motor will be started to rotate the cutter. But if the lid is not properly mounted on the top portion of the bowl, meaning the trigger portion has yet to push down the switch connecting rod, the motor will not rotate the cutter even if the operating switch is triggered in advertently.

As the conventional approach only involves covering the bowl of a food processor with its lid, the lid may be shaken off the bowl due to vibrations caused by the large kinetic energy of the motor while the food processor is in operation, or more particularly while the cutter assembly in the bowl is rotating at high speed to process food. This is especially true when a large amount of food is being processed in a large-capacity bowl and incurs a huge kinetic energy of the motor. The existing food processors, therefore, leave something to be desired in terms of their design for safety. US2009/045272 discloses a juicer safety device having a cap provided with a rotary member for rotating after the cap is closed on a container, forcing a contact block on the rotary member to insert in a chamber of a sidearm so as to push down a push rod with a contact rod extending down from the lower end of the push rod to touch and turn on a micro switch to turn on the power of the juicer, safe and convenient to handle.

### BRIEF SUMMARY OF THE INVENTION

It is an objective of the present invention to provide a lidded device for use in a food processor, wherein the lidded device can lock a lid tightly to a bowl and keep the lid from being shaken off the bowl while the food processor is operating at high speed, thus effectively enhancing the safety of use of the food processor.

To achieve the above objective, the present invention provides a lidded device configured for use in a food processor and including a bowl and a lid of the bowl, wherein the bowl is provided with a safety mechanism. The lidded device further includes a fastener attached to the lid. The fastener can be rotated horizontally with respect to the lid between a first extreme position and a second extreme position. When the fastener is at the first extreme position, the lid precisely covers the bowl, and the safety mechanism is in a locking state to prevent the food processor from being started. When the fastener is at the second extreme position, the lid is locked to the bowl, and the safety mechanism is in an unlocking state and allows the food processor to be started. The fastener comprises at least two fastening members.

According to a preferred embodiment, the lidded device of the food processor is characterized in that the fastener includes a grip portion and at least two fastening members connected to the grip portion, that the grip portion is centrally provided with a circular through hole, that the lid is provided with a protruding column corresponding to and matching the central circular through hole in the grip portion, that the protruding column has an outer surface provided with a plurality of blocks, that the circular through hole has an inner wall provided with a plurality of grooves corresponding to and matching the blocks respectively, and that when the fastener is rotated, each block and the corresponding groove form a sliding fit therebetween.

According to a preferred embodiment, the lidded device of the food processor is characterized in that each fastening member has a distal end provided with a fastening member coupling part, that the bowl is provided with at least two bowl coupling parts corresponding to and configured to couple with the fastening member coupling parts respectively, and that when the fastening members are at the second extreme position, the fastening member coupling parts are fastened with the bowl coupling parts respectively.

According to a preferred embodiment, the lidded device of the food processor is characterized in that each fastening member coupling part is a hook portion that bends inward, that each bowl coupling part is configured as a projection for coupling with a corresponding one of the hook portions, and that the grip portion has an outer surface provided with a plurality of recesses.

According to a preferred embodiment, the lidded device of the food processor is characterized in that the lid has an upper portion provided with at least two sunken portions, and that the at least two fastening members are opposite each other and are provided in the sunken portions of the lid respectively.

According to a preferred embodiment, the lidded device of the food processor is characterized in that the first extreme position and the second extreme position form an included angle of 10∼45 degrees.

According to a preferred embodiment, the lidded device of the food processor is characterized in that the bowl has an outer side provided with a vertically extending receiving channel, and that the safety mechanism is located in the receiving channel.

According to a preferred embodiment, the lidded device of the food processor is characterized in that the bowl is provided with a hollow handle, that the handle is penetrated by a receiving channel, and that the safety mechanism is located in the receiving channel.

According to a preferred embodiment, the lidded device of the food processor is characterized in that the safety mechanism includes a switch connecting rod, a microswitch located on the main body of the food processor, and a trigger ring; that the switch connecting rod can be vertically moved in the receiving channel; that the switch connecting rod has a top end exposed from a top portion of the receiving channel; that the switch connecting rod has a lower end hinged to one end of the trigger ring; that the opposite end of the trigger ring is hinged to a bottom portion of the bowl; that the trigger ring includes a protruding portion matching the microswitch; that the protruding portion presses down and thereby triggers the microswitch when the switch connecting rod drives the trigger ring downward; and that the safety mechanism further includes an elastic element for constantly pushing the switch connecting rod upward.

According to a preferred embodiment, the lidded device of the food processor is characterized in that the lid is a component that can be disassembled and includes a top lid portion and a bottom lid portion, that the fastener is located between the top lid portion and the bottom lid portion, that the lid is provided with a plurality of openings corresponding in position and number to the fastening members, that the fastening members extend out of the lid through the openings respectively, that the grip portion is centrally provided with a circular through hole, that a protruding column is provided between the top lid portion and the bottom lid portion and corresponds to the circular through hole, and that the grip portion is mounted around the protruding column and projects upward from the top lid portion.

According to a preferred embodiment, the lidded device of the food processor is characterized in that the fastener is also a component that can be disassembled and includes a grip portion, a main part, and at least two fastening members; that the fastening members are connected to the outer periphery of the main part; and that the grip portion is detachably connected to the main part.

### BRIEF DESCRIPTION OF THE SEVERAL VIEWS OF THE DRAWINGS

FIG. 1 is a perspective view of a lidded device according to the present invention for use in a food processor;
FIG. 2 is a perspective view of certain components of the lidded device in FIG. 1;
FIG. 3 is a perspective view showing the structure of the safety mechanism of the lidded device in FIG. 1;
FIG. 4 is a perspective view of another lidded device according to the present invention for use in a food processor, showing in particular a component that can be disassembled; and
FIG. 5 is an exploded perspective view of another component of the lidded device in FIG. 4 that can be disassembled.

### DETAILED DESCRIPTION OF THE INVENTION

To shed more light on the above and other objectives, as well as the technical solutions and advantageous effects, of the present invention, some illustrative embodiments are detailed below with reference to the accompanying drawings. It should be understood that the embodiments described herein serve only to demonstrate the invention but are not limiting.

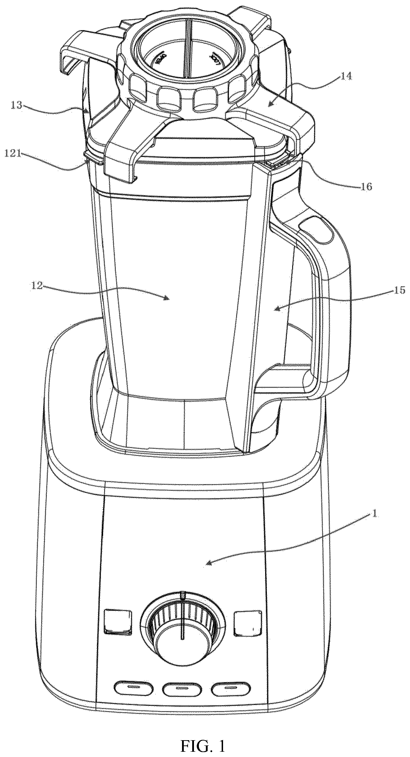

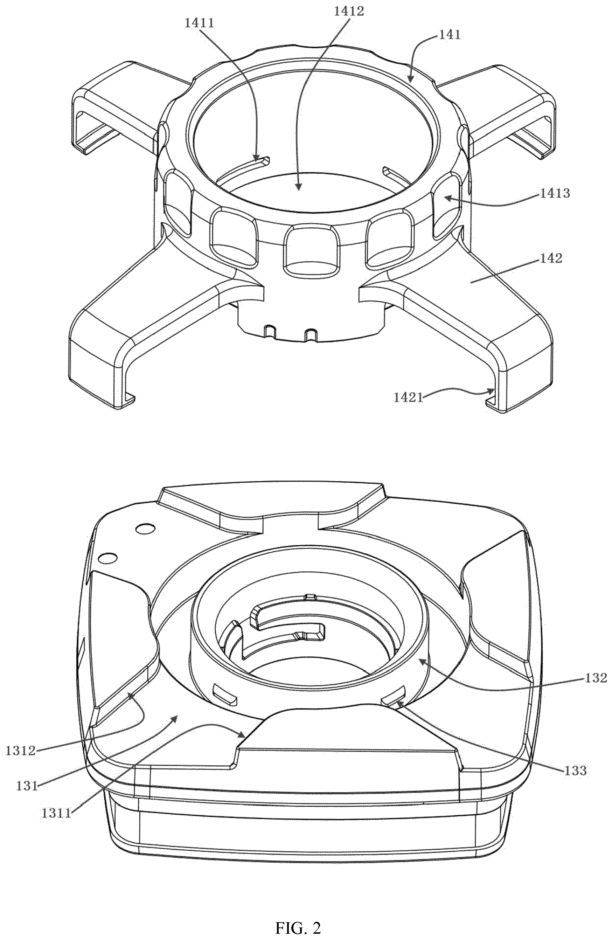

As shown in FIG. 1 and FIG. 2, the present invention provides a lidded device for use in a food processor, wherein the food processor includes a main body 1; a driving motor, a switch, etc. provided in the main body 1; and the lidded device mounted on the main body. The lidded device includes a bowl 12 and a lid 13 of the bowl. The bowl 12 is provided with a safety mechanism 16. The safety mechanism 16 is located in a vertically extending receiving channel 15 on the bowl. The bowl 12is also provided therein with a cutter assembly (not shown) for processing food. The lidded device further includes a fastener 14 attached to the lid.

More specifically, the fastener 14 includes a grip portion 141 and at least two fastening members 142 connected to the grip portion. The grip portion 141 is centrally provided with a circular through hole 1412, and the lid 13 is provided with a protruding column 132 corresponding to the circular through hole 1412. The protruding column 132 is mounted in the through hole 1412. The outer surface of the protruding column 132 is provided with a plurality of blocks 133, and the inner wall of the circular through hole 1412 is provided with a plurality of grooves 1411 corresponding to and matching the blocks 133 respectively. When the fastener 14 is rotated, each block 133 and the corresponding groove 1411 form a sliding fit therebetween. Furthermore, each fastening member 142 has a distal end provided with a fastening member coupling element 1421, and the bowl 12 has a top portion provided with a plurality of bowl coupling elements 121 configured to fasten with the fastening member coupling elements 1421 respectively. Preferably, each fastening member coupling element 1421 is a hook portion that bends inward, and each bowl coupling element 121 is a projection. It should be understood, however, that the fastening member coupling elements 1421 and the bowl coupling elements 121 in the present invention may be structured in other ways well known in the art, for example as (but not limited to) latches, pins, ribs, and channels. Moreover, the outer surface of the grip portion 141 of the fastener 14 is provided with a plurality of recesses 1413 so that a user can grip the grip portion 141 with ease.

By rotating the grip portion 141 of the fastener 14, the fastening members 142 can be rotated horizontally between a first extreme position 1311 and a second extreme position 1312 on the lid. The included angle between the first extreme position 1311 and the second extreme position 1312 is preferably 10∼45 degrees. It is also preferable that the lid 13 has an upper portion provided with at least two sunken portions 131, that the at least two fastening members 142 are opposite each other and are provided in the sunken portions 131 respectively, and that each sunken portion 131 has two lateral sides corresponding to the first extreme position 1311 and the second extreme position 1312 respectively. When the fastening members 142 are at the first extreme position 1311, the lid 13 covers the top portion of the bowl 12 properly, and the safety mechanism 16 is in a locking state to prevent the food processor from being started. In this state, the driving motor in the main body 1 cannot be effectively started, let alone rotate the cutter in the bowl, even if the operating switch on the main body 1 is pressed. When the fastening members 142 are at the second extreme position 1312, the lid 13 is locked to the bowl 12, and the safety mechanism 16 is in an unlocking state that allows the food processor to be started. If the operating switch on the main body 1 is pressed now, the driving motor in the main body 1 will be started to drive the cutter in the bowl into rotation. Preferably, the receiving channel 15 is provided on the outer wall of the bowl 12, e.g., along the corner between two adjacent sidewalls of the outer side of the bowl. The receiving channel 15 may alternatively be provided on a handgrip of the bowl 12 or as a cantilever on the outer side of the bowl; the present invention has no limitation in this regard.

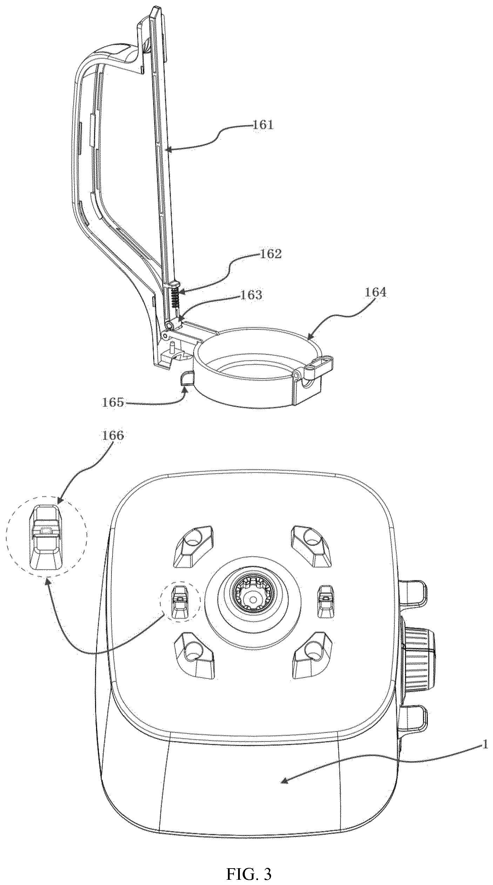

Referring to FIG. 3, the safety mechanism 16 includes a switch connecting rod 161, an elastic part 162 for constantly pushing the switch connecting rod upward, and a microswitch 166 provided on the main body 1 of the food processor. The lower end of the switch connecting rod 161 is hinged to one end of a trigger ring 164 by a pin 163. The opposite end of the trigger ring 164 is hinged to a bottom portion of the bowl 12. The trigger ring 164 includes a protruding portion 165 that matches the microswitch 166. A top portion of the switch connecting rod 161 is provided with an inclined surface that has a certain inclination angle and that is exposed from a top portion of the receiving channel 15. The switch connecting rod 161 can be moved vertically in the receiving channel 15. Once the fastening members 142 are moved from the first extreme position 1311 to the second extreme position 1312 by rotating the grip portion 141, the hook portion 1421 at the distal end of each fastening member 142 corresponds to one of the projections 121 on the bowl 12andthereby locks the lid 13 to the top portion of the bowl 12. In particular, the bottom side of the hook portion 1421 that has been moved to the top portion of the receiving channel 15 presses down and thus triggers the switch connecting rod 161. As a result, the switch connecting rod 161 is moved downward in the receiving channel 15 and drives the trigger ring 164, which is at the lower end of the switch connecting rod 161, to move downward too. The trigger ring 164 thus triggers the microswitch 166 on the main body 1, allowing the motor in the main body 1 to rotate the cutter assembly when the operating switch on the main body 1 is pressed. When the fastening members 142 are subsequently moved from the second extreme position 1312 to the first extreme position 1311 by rotating the grip portion 141, the hook portion 1421 of each fastening member 142 is separated from the corresponding projection 121 of the bowl 12. In the meantime, the hook portion 1421 at the top portion of the receiving channel 15 releases the switch connecting rod 161 such that the switch connecting rod 161 is moved upward to its original position and also moves the trigger ring 164 upward. The trigger ring 164 thus releases the microswitch 166 and stops the operation of the food processor immediately, allowing the lid 13 to be removed from the bowl 12. Please note that the safety mechanism 16 is not an essential feature of the present invention and may be other similar structures known in the art. In this embodiment, the receiving channel 15 is provided on the outer side of the bowl 12and extends along the corner between two adjacent sidewalls of the bowl; the bowl 12 has a square cross section, and the outer side of the top portion of the bowl 12 is provided with four projections 121, each located at a corner between two adjacent sidewalls of the bowl; the lid 13 also has a square shape; and the fastener 14 has four fastening members 142 extending in directions corresponding to the diagonals of the square lid 13. Therefore, when the fastening members 142 are at the first extreme position 1311, the lid 13 can be successfully mounted on the top portion of the bowl 12 regardless of which of the fastening members 142 is aligned with the receiving channel 15. That is to say, the lid 13 has four mounting orientations, which provides convenience of use. It should be understood, however, that this embodiment imposes no limitation on the shapes of the bowl 12 and of the lid 13. Besides, the lid 13 may be further provided with an observation opening, wherein the observation opening is provided with a plug-like cover configured to couple with the lid 13through engaging grooves or other conventional means. The plug-like cover can be opened to enable observation of how the food in the bowl 12 is being processed.

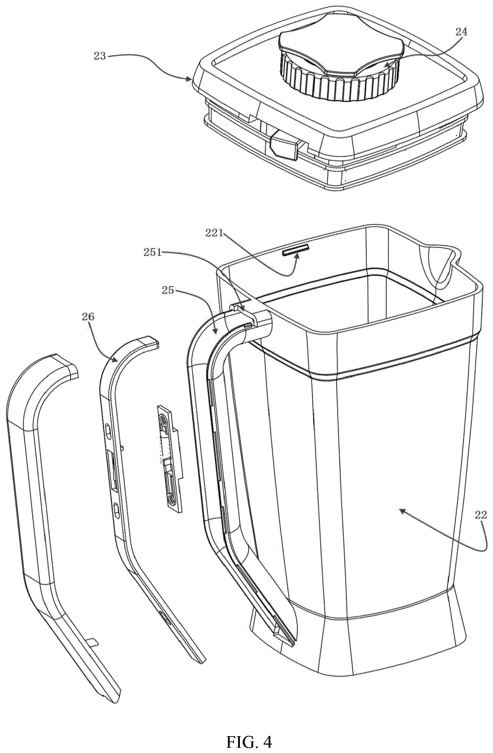

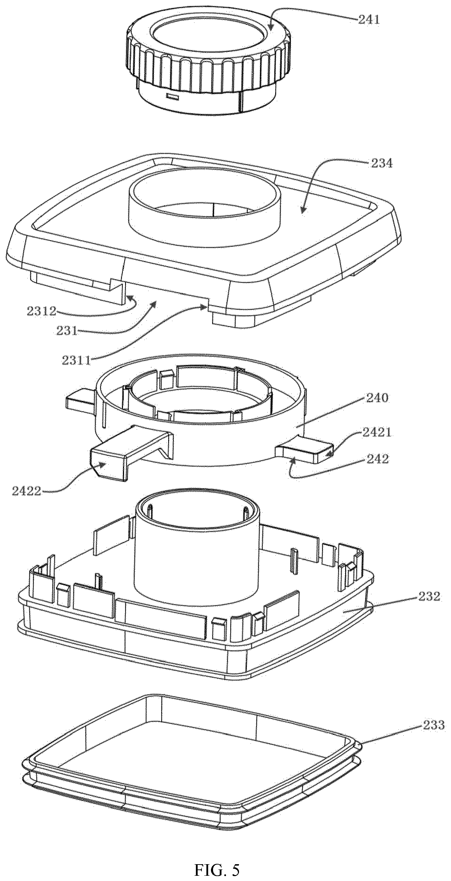

To reduce the difficulty of manufacture, and to facilitate cleaning by disassembly, another embodiment of the present invention is disclosed herein as shown in FIG. 4 and FIG. 5. The lidded device of a food processor according to the second embodiment includes a bowl 22, a lid 23, and a fastener 24.The bowl 22 has a handle provided therein with a hollow receiving channel 25. A safety mechanism 26 is located in the receiving channel 25. The safety mechanism 26 may have the same structure as in the first embodiment, and in that case, only the shape of the safety mechanism 26 needs modification to adapt to the receiving channel 25. A detailed description of the safety mechanism 26 is therefore omitted herein. The receiving channel 25 has a top portion provided with a groove 251. The bowl 22 is provided with a plurality of (e.g., two) bowl coupling parts 221. The lid 23 is a component that can be disassembled and includes a bottom lid portion 232 and a top lid portion 234.The bottom lid portion 232 may be provided with a gasket 233 to increase tightness between the lid 23 and the bowl 22 after the latter is covered with the former. The bottom lid portion 232 and the top lid portion 234 may be coupled to each other by any conventional means, e.g., by fastening, pinned connection, locking, or the like. The fastener 24 is also a component that can be disassembled and includes a main part 240, at least two fastening members 242 connected to the main part 240, and a grip portion 241. The grip portion 241 is coupled to the main part 240 by a conventional means such as engaging grooves or engaging holes. A plurality of openings 231 are provided between the bottom lid portion 232 and the top lid portion 234and correspond to the fastening members 242 respectively. Each fastening member 242 extends out of the lid 23 through the corresponding opening 231. More specifically, there are three fastening members 242. One of the fastening members 242 (hereinafter referred to as the first fastening member 242) has a fastening member coupling part 2422 matching the groove 251 while each of the other two fastening members 242 (hereinafter referred to as the second fastening members 242) has a fastening member coupling part 2421 configured to fasten with a corresponding one of the bowl coupling parts 221. By rotating the grip portion 241, each fastening member 242 can be rotated horizontally between a first extreme position 2311 and a second extreme position 2312 in the corresponding opening 231, wherein the included angle between the first extreme position 2311 and the second extreme position 2312 is preferably 10∼45 degrees. When the fastening members 242 are at the first extreme position 2311, the lid 23 covers the bowl 22 properly. When the fastening members 242 are at the second extreme position 2312, the fastening member coupling parts 2421 of the second fastening members 242 are located below and fastened with the bowl coupling parts 221 of the bowl 22 respectively, thereby locking the lid 23 to the bowl 22, wherein the bowl coupling parts 221 are projections provided on the inner wall of a top portion of the bowl 22. At the same time, the fastening member coupling part 2422 at the distal end of the first fastening member 242 enters the groove 251 in the top portion of the receiving channel 25 on the bowl 22 and presses down the switch connecting rod of the safety mechanism 26. S\uch that the switch connecting rod drives the trigger ring at the lower end of the switch connecting rod to move downward. The trigger ring thus triggers the microswitch on the main body of the food processor, allowing the motor in the main body to be started and rotate the cutter assembly when the operating switch on the main body is pressed. Once the fastening members 242 are moved from the second extreme position 2312 to the first extreme position 2311 by rotating the grip portion 241, each of the fastening member coupling parts 2421 at the distal ends of the second fastening members 242 are separated from the bowl coupling parts 221 respectively, and the fastening member coupling part 2422 at the distal end of the first fastening member 242 releases the switch connecting rod of the safety mechanism 26 in the receiving channel 25. As a result, the switch connecting rod is moved upward to its original position and moves the trigger ring upward to release the microswitch on the main body 1, thereby stopping the operation of the food processor at once and allowing the lid 23 to be removed from the bowl 22. The fastening members 242 and the fastening member coupling parts 2421, 2422 may vary in structure with the receiving channel 25 on the bowl 22 and the bowl coupling parts 221, provided that the fastening member coupling parts match the groove of the receiving channel and the bowl coupling parts respectively; the present invention has no limitation in this regard.

### Technical Effect

The lidded device of the present invention for use in a food processor is so designed that the lid stays locked to the bowl while the food processor is in operation. More specifically, the lid of the food processor is prevented from being shaken off the bowl by vibrations attributable to the kinetic energy of the motor of the food processor, and this enhances the safety of use of the food processor effectively. The present invention is particularly useful where a food processor has a large-capacity bowl and is configured to work at high power in order to process a large amount of food.

## Claims

1. A lidded device of a food processor, the lidded device comprising a bowl (12, 22) and a lid (13, 23) of the bowl (12,22), the bowl (12,22) being provided with a safety mechanism (16), the lidded device further comprising a fastener (14, 24) attached to the lid (13, 23), wherein the fastener (14, 24) is horizontally rotatable with respect to the lid (13, 23) between a first extreme position (1311, 2311) and a second extreme position (1312, 2312); when the fastener (14, 24) is at the first extreme position (1311, 2311), the lid (13, 23) precisely covers the bowl (12,22), and the safety mechanism (16, 26) is in a locking state to prevent the food processor from being started; and when the fastener (14, 24) is at the second extreme position (1312, 2312), the lid (13, 23) is locked to the bowl (12, 22), and the safety mechanism (16, 26) is in an unlocking state, allowing the food processor to be started, **characterized in that** the fastener (14, 24) comprises at least two fastening members (142, 242).

2. The lidded device of the food processor as recited in claim 1, wherein the fastener comprises a grip portion (141) and at least two fastening members (142) connected to the grip portion (141), the grip portion (141) is centrally provided with a circular through hole (1412), the lid (13) is provided with a protruding column (132) corresponding to and matching the central circular through hole (1412) in the grip portion (141), the protruding column (132) has an outer surface provided with a plurality of blocks (133), the circular through hole (1412) has an inner wall provided with a plurality of grooves (1411) that correspond to and match the blocks (133) respectively, and when the fastener (14) is rotated, each of the blocks (133) and a corresponding one of the grooves (1411) form a sliding fit therebetween.

3. The lidded device of the food processor as recited in claim 2, wherein each of the fastening members (142) has a distal end provided with a fastening member coupling part, the bowl (12) is provided with at least two bowl coupling parts corresponding to and configured to couple with the fastening member coupling parts respectively, and when the fastening members (142) are at the second extreme position (1312), the fastening member coupling parts are fastened with the bowl coupling parts respectively.

4. The lidded device of the food processor as recited in claim 3, wherein each of the fastening member coupling parts is a hook portion (1421) that bends inward, each of the bowl (12) coupling parts is configured as a projection for coupling with a corresponding one of the hook portions (1421), and the grip portion (141) has an outer surface provided with a plurality of recesses (1413).

5. The lidded device of the food processor as recited in claim 2, wherein the lid (13) has an upper portion provided with at least two sunken portions (131), and the at least two fastening members (142) are opposite each other and are provided in the sunken portions (131) of the lid (13) respectively.

6. The lidded device of the food processor as recited in any of claims 1 to 5, wherein the first extreme position (1311, 2311) and the second extreme position (1312, 2311) form an included angle of 10-45 degrees.

7. The lidded device of the food processor as recited in claim 6, wherein the bowl (12, 22) has an outer side provided with a vertically extending receiving channel (15, 25), and the safety mechanism (16, 26) is located in the receiving channel (15, 25).

8. The lidded device of the food processor as recited in claim 6, wherein the bowl (12) is provided with a hollow handle, the handle is penetrated by a receiving channel (15), and the safety mechanism (16) is located in the receiving channel (15).

9. The lidded device of the food processor as recited in claim 7 or 8, wherein the safety mechanism (16, 26) comprises a switch connecting rod (161), a microswitch located on a main body of the food processor, and a trigger ring; the switch connecting rod (161) is vertically movable in the receiving channel (15, 25); the switch connecting rod (161) has a top end exposed from a top portion of the receiving channel (15, 25); the switch connecting rod (161) has a lower end hinged to an end of the trigger ring; the trigger ring has an opposite end hinged to a bottom portion of the bowl; the trigger ring comprises a protruding portion matching the microswitch; the protruding portion presses down and thereby triggers the microswitch when the switch connecting rod (161) drives the trigger ring downward; and the safety mechanism (16, 26) further comprises an elastic element for constantly pushing the switch connecting rod (161) upward.

10. The lidded device of the food processor as recited in claim1, wherein the lid (23) is a component able to be disassembled and comprises a top lid portion (234) and a bottom lid portion (232), the fastener (24) is located between the top lid portion (234) and the bottom lid portion (232), the lid (23) is provided with a plurality of openings (232) corresponding in position and number to the fastening members (242), the fastening members (242) extend out of the lid (23) through the openings (231) respectively, the grip portion (241) is centrally provided with a circular through hole, a protruding column is provided between the top lid portion (234) and the bottom lid portion (232) and corresponds to the circular through hole, and the grip portion (241) is mounted around the protruding column and projects upward from the top lid portion (232).

11. The lidded device of the food processor as recited in claim 10, wherein the fastener (24) is also a component able to be disassembled and comprises a grip portion (141), a main part (240), and at least two fastening members (242); the fastening members (242) are connected to an outer periphery of the main part (240); and the grip portion (141) is detachably connected to the main part (240).

## Patentansprüche

1. Eine Deckelvorrichtung einer Küchenmaschine, wobei die Deckelvorrichtung eine Schüssel (12, 22) und einen Deckel (13, 23) der Schüssel (12, 22) umfasst, wobei die Schüssel (12, 22) mit einem Sicherheitsmechanismus (16) versehen ist, wobei die Deckelvorrichtung ferner einen am Deckel (13, 23) angebrachten Verschluss (14, 24) umfasst, wobei der Verschluss (14, 24) in Bezug auf den Deckel (13, 23) zwischen einer ersten extremen Position (1311, 2311) und einer zweiten extremen Position (1312, 2312) horizontal drehbar ist; wenn sich der Verschluss (14, 24) in der ersten Extremposition (1311, 2311) befindet, deckt der Deckel (13, 23) die Schüssel (12, 22) genau ab, und der Sicherheitsmechanismus (16, 26) befindet sich in einem Verriegelungszustand, um zu verhindern, dass die Küchenmaschine gestartet wird; und wenn sich der Verschluss (14, 24) in der zweiten Extremposition (1312, 2312) befindet, ist der Deckel (13, 23) an der Schüssel (12, 22) verriegelt und der Sicherheitsmechanismus (16, 26) in einem Entriegelungszustand, der das Starten der Küchenmaschine ermöglicht, **dadurch gekennzeichnet, dass** der Verschluss (14, 24) mindestens zwei Befestigungselemente (142, 242) umfasst.

2. Die Deckelvorrichtung der Küchenmaschine nach Anspruch 1, wobei der Verschluss einen Griffabschnitt (141) und mindestens zwei mit dem Griffabschnitt (141) verbundene Befestigungselemente (142) umfasst, der Griffabschnitt (141) zentral mit einem kreisförmigen Durchgangsloch (1412) versehen ist, der Deckel (13) mit einer vorstehenden Säule (132) versehen ist, die dem zentralen kreisförmigen Durchgangsloch (1412) im Griffabschnitt (141) entspricht und mit diesem übereinstimmt, die hervorstehende Säule (132) eine Außenfläche aufweist, die mit einer Vielzahl von Blöcken (133) versehen ist, das kreisförmige Durchgangsloch (1412) eine Innenwand aufweist, die mit einer Vielzahl von Nuten (1411) versehen ist, die jeweils den Blöcken (133) entsprechen und zu diesen passen, und wenn das Befestigungselement (14) gedreht wird, bildet jeder der Blöcke (133) und eine entsprechende der Nuten (1411) einen Gleitsitz dazwischen.

3. Die Deckelvorrichtung der Küchenmaschine nach Anspruch 2, wobei jedes der Befestigungselemente (142) ein distales Ende aufweist, das mit einem Kupplungsteil des Befestigungselements versehen ist, die Schüssel (12) mit mindestens zwei Kupplungsteilen der Schüssel versehen ist, die dem Befestigungselement-Kupplungsteil entsprechen und so konfiguriert sind, dass sie jeweils mit dem Befestigungselement-Kupplungsteil gekoppelt werden, und wenn sich die Befestigungselemente (142) in der zweiten extremen Position (1312) befinden, die Kupplungsteile des Befestigungselements jeweils mit den Schüssel-Kupplungsteilen befestigt sind.

4. Die Deckelvorrichtung der Küchenmaschine nach Anspruch 3, wobei jedes der Kupplungsteile des Befestigungselements ein nach innen gebogener Hakenabschnitt (1421) ist, jedes der Kupplungsteile der Schüssel (12) als ein Vorsprung zum Kuppeln mit einem entsprechenden der Hakenabschnitte (1421) konfiguriert ist und der Griffabschnitt (141) eine mit einer Vielzahl von Aussparungen (1413) versehene Außenfläche aufweist.

5. Die Deckelvorrichtung der Küchenmaschine nach Anspruch 2, wobei der Deckel (13) einen oberen Abschnitt aufweist, der mit mindestens zwei versenkten Abschnitten (131) versehen ist, und mindestens zwei Befestigungselemente (142) einander gegenüberliegen und jeweils in den versenkten Abschnitten (131) des Deckels (13) vorgesehen sind.

6. Die Deckelvorrichtung der Küchenmaschine nach einem der Ansprüche 1 bis 5, wobei die erste extremen Position (1311, 2311) und die zweite extremen Position (1312, 2311) einen eingeschlossenen Winkel von 10-45 Grad bilden.

7. Die Deckelvorrichtung der Küchenmaschine nach Anspruch 6, wobei die Schüssel (12, 22) eine Außenseite mit einem vertikal verlaufenden Aufnahmekanal (15, 25) aufweist und der Sicherheitsmechanismus (16, 26) in dem Aufnahmekanal (15, 25) angeordnet ist.

8. Die Deckelvorrichtung der Küchenmaschine nach Anspruch 6, wobei die Schüssel (12) mit einem hohlen Griff versehen ist, der Griff von einem Aufnahmekanal (15) durchdrungen ist und der Sicherheitsmechanismus (16) in dem Aufnahmekanal (15) angeordnet ist.

9. Die Deckelvorrichtung der Küchenmaschine nach Anspruch 7 oder 8, wobei der Sicherheitsmechanismus (16, 26) eine Schalterverbindungsstange (161), einen Mikroschalter, der sich an einem Hauptkörper der Küchenmaschine befindet, und einen Auslösering umfasst; die Schalterverbindungsstange (161) vertikal im Aufnahmekanal (15, 25) beweglich ist; die Schalterverbindungsstange (161) ein oberes Ende aufweist, das von einem oberen Abschnitt des Aufnahmekanals (15, 25) freilegt; die Schalterverbindungsstange (161) ein unteres Ende aufweist, das an ein Ende des Auslöseringes angelenkt ist; der Auslösering ein entgegengesetztes Ende aufweist, das an einem unteren Abschnitt der Schale angelenkt ist; der Auslösering einen vorstehenden Abschnitt umfasst, der zu dem Mikroschalter passt; der vorstehende Abschnitt nach unten drückt und dadurch den Mikroschalter auslöst, wenn die Schalterverbindungsstange (161) den Auslösering nach unten drückt; und der Sicherheitsmechanismus (16, 26) ferner ein elastisches Element zum konstanten Drücken der Schalterverbindungsstange (161) nach oben umfasst.

10. Die Deckelvorrichtung der Küchenmaschine nach Anspruch 1, wobei der Deckel (23) ein zerlegbares Bauteil ist und einen oberen Deckelteil (234) und einen unteren Deckelteil (232) aufweist, der Befestigungsteil (24) zwischen dem oberen Deckelteil (234) und dem unteren Deckelteil (232) angeordnet ist, der Deckel (23) mit einer Vielzahl von Öffnungen (232) versehen ist, die in Position und Anzahl den Befestigungselementen (242) entsprechen, die Befestigungselemente (242) sich jeweils durch die Öffnungen (231) aus dem Deckel (23) heraus erstrecken, der Griffabschnitt (241) mittig mit einem kreisförmigen Durchgangsloch versehen ist, eine vorstehende Säule zwischen dem oberen Deckelabschnitt (234) und dem unteren Deckelabschnitt (232) vorgesehen ist und dem kreisförmigen Durchgangsloch entspricht, und der Griffabschnitt (241) um die vorstehende Säule herum montiert ist und vom oberen Deckelabschnitt (232) nach oben vorsteht.

11. Die Deckelvorrichtung der Küchenmaschine nach Anspruch 10, wobei der Verschluss (24) ebenfalls eine Komponente ist, die zerlegt werden kann und einen Griffabschnitt (141), ein Hauptteil (240) und mindestens zwei Befestigungselemente (242) umfasst; die Befestigungselemente (242) mit einem äußeren Umfang des Hauptteils (240) verbunden sind; und der Griffabschnitt (141) lösbar mit dem Hauptteil (240) verbunden ist.

## Revendications

1. Un dispositif à couvercle d'un robot culinaire, le dispositif à couvercle comprenant un bol (12, 22) et un couvercle (13, 23) du bol (12,22), le bol (12,22) étant pourvu d'un mécanisme de sécurité (16), le dispositif à couvercle comprenant en outre une attache (14, 24) fixée au couvercle (13, 23), dans lequel l'attache (14, 24) peut tourner horizontalement par rapport au couvercle (13, 23) entre une première position extrême (1311, 2311) et une seconde position extrême (1312, 2312) ; lorsque l'attache (14, 24) est dans la première position extrême (1311, 2311), le couvercle (13, 23) recouvre précisément le bol (12,22) et le mécanisme de sécurité (16, 26) est dans un état de verrouillage pour empêcher le robot culinaire de démarrer ; et lorsque l'attache (14, 24) est dans la seconde position extrême (1312, 2312), le couvercle (13, 23) est verrouillé sur le bol (12, 22) et le mécanisme de sécurité (16, 26) est dans un état de déverrouillage permettant de démarrer le robot culinaire, **caractérisé en ce que** l'attache (14, 24) comprend au moins deux éléments de fixation (142, 242).

2. Le dispositif à couvercle du robot culinaire selon la revendication 1, dans lequel l'attache comprend une partie de préhension (141) et au moins deux éléments de fixation (142) connectés à la partie de préhension (141), la partie de préhension (141) est munie au centre d'un trou traversant circulaire (1412), le couvercle (13) est pourvu d'une colonne saillante (132) correspondant et concordant au trou traversant circulaire central (1412) dans la partie de préhension (141), la colonne saillante (132) a une surface extérieure pourvue d'une pluralité de blocs (133), le trou traversant circulaire (1412) a une paroi intérieure pourvue d'une pluralité de rainures (1411) qui correspondent et concordent respectivement aux blocs (133), et lorsque l'attache (14) est tournée, chacun des blocs (133) et l'une correspondante des rainures (1411) forment un ajustement coulissant entre eux.

3. Le dispositif à couvercle du robot culinaire selon la revendication 2, dans lequel chacun des éléments de fixation (142) a une extrémité distale munie d'une partie de couplage d'élément de fixation, le bol (12) est pourvu d'au moins deux parties de couplage de bol correspondant à et configuré pour s'accoupler avec les parties de couplage de l'élément de fixation respectivement, et lorsque les éléments de fixation (142) sont dans la seconde position extrême (1312), les parties de couplage des éléments de fixation sont fixées avec les parties de couplage du bol respectivement.

4. Le dispositif à couvercle du robot culinaire selon la revendication 3, dans lequel chacune des parties de couplage de l'élément de fixation est une partie de crochet (1421) qui se plie vers l'intérieur, chacune des parties de couplage du bol (12) est configurée comme une saillie pour le couplage avec l'une correspondante des parties de crochet (1421) et la partie de préhension (141) a une surface extérieure pourvue d'une pluralité d'évidements (1413).

5. Le dispositif à couvercle du robot culinaire selon la revendication 2, dans lequel le couvercle (13) a une partie supérieure pourvue d'au moins deux parties enfoncées (131), et les au moins deux éléments de fixation (142) sont opposés l'un à l'autre et sont prévus dans les parties enfoncées (131) du couvercle (13) respectivement.

6. Le dispositif à couvercle du robot culinaire selon l'une des revendications 1 à 5, dans lequel la première position extrême (1311, 2311) et la seconde position extrême (1312, 2311) forment un angle inclus de 10 à 45 degrés.

7. Le dispositif à couvercle du robot culinaire selon la revendication 6, dans lequel le bol (12, 22) a un côté extérieur pourvu d'un canal de réception (15, 25) s'étendant verticalement, et le mécanisme de sécurité (16, 26) est situé dans le canal de réception (15, 25).

8. Le dispositif à couvercle du robot culinaire selon la revendication 6, dans lequel le bol (12) est pourvu d'une poignée creuse, la poignée est traversée par un canal de réception (15), et le mécanisme de sécurité (16) est situé dans le canal de réception (15).

9. Le dispositif à couvercle du robot culinaire selon la revendication 7 ou 8, dans lequel le mécanisme de sécurité (16, 26) comprend une bielle interrupteur (161), un micro-interrupteur situé sur un corps principal du robot culinaire et une bague de déclenchement ; la bielle interrupteur (161) est mobile verticalement dans le canal de réception (15, 25) ; la bielle interrupteur (161) a une extrémité supérieure exposée à partir d'une partie supérieure du canal de réception (15, 25) ; la bielle interrupteur (161) a une extrémité inférieure articulée sur une extrémité de la bague de déclenchement ; la bague de déclenchement a une extrémité opposée articulée sur une partie inférieure du bol ; la bague de déclenchement comprend une partie saillante correspondant au micro-interrupteur ; la partie saillante appuie vers le bas et déclenche ainsi le micro-interrupteur, lorsque la bielle interrupteur (161) entraîne la bague de déclenchement vers le bas ; et le mécanisme de sécurité (16, 26) comprend en outre un élément élastique pour pousser constamment la bielle interrupteur (161) vers le haut.

10. Le dispositif à couvercle du robot culinaire selon la revendication 1, dans lequel le couvercle (23) est un composant pouvant être démonté et comprend une partie supérieure de couvercle (234) et une partie inférieure de couvercle (232), l'attache (24) est située entre la partie supérieure de couvercle (234) et la partie inférieure de couvercle (232), le couvercle (23) est pourvu d'une pluralité d'ouvertures (232) correspondant en position et en nombre aux éléments de fixation (242), les éléments de fixation (242) s'étendent hors du couvercle (23) à travers les ouvertures (231) respectivement, la partie de préhension (241) est pourvue au centre d'un trou traversant circulaire, une colonne saillante est prévue entre la partie supérieure de couvercle (234) et la partie inférieure de couvercle (232) et correspond au trou traversant circulaire, et la partie de préhension (241) est montée autour de la colonne saillante et fait saillie vers le haut à partir de la partie supérieure de couvercle (232).

11. Le dispositif à couvercle du robot culinaire selon la revendication 10, dans lequel l'attache (24) est également un composant pouvant être démonté et comprend une partie de préhension (141), une partie principale (240) et au moins deux éléments de fixation (242) ; les éléments de fixation (242) sont connectés à une périphérie externe de la partie principale (240) ; et la partie de préhension (141) est connectée de manière amovible à la partie principale (240).
